# EUROPÄISCHE PATENTANMELDUNG

(11) **EP 1 912 431 A2**
(43) Veröffentlichungstag der Anmeldung: **16.04.2008**
(21) Anmeldenummer: 07117457.7
(22) Anmeldetag: 28.09.2007
(51) Int. Cl.: H04N 5/232, H04N 7/18

(54) **Verfahren und Vorrichtung zur Steuerung einer schwenkbaren Kamera**

(30) Priorität: 09.10.2006 DE 102006048006
(71) Anmelder: Funkwerk plettac electronic GmbH, 90766 Fürth (DE)
(72) Erfinder: Michaelis, Markus, 81547, München (DE)
(74) Vertreter: Eichstädt, Alfred

(57) **Zusammenfassung**

Die Erfindung betrifft ein Verfahren zur Steuerung einer PTZ-Kamera mit folgenden Schritten:
- Erstellung eines Übersichtsbildes
- Darstellung des Übersichtsbildes auf einem Display,
- Einblendung einer Markierung in das dargestellte Übersichtsbild zur Anzeige der momentanen Blickrichtung und/oder der momentanen Zoomeinstellung der PTZ-Kamera,
- Veränderung der Markierung im dargestellten Übersichtsbild und
- Veränderung der Blickrichtung und/oder der Zoomeinstellung der PTZ-Kamera als Reaktion auf die Veränderung der Markierung.

## Beschreibung

Die Erfindung betrifft ein Verfahren und eine Vorrichtung zur Steuerung einer schwenkbaren Kamera

Aus der DE 198 11 286 C2 ist bereits eine Kamerasteuerung bekannt, die insbesondere für eine Überwachungskamera vorgesehen ist. Dabei wird eine Steuereinheit verwendet, die eine Rechnereinheit, eine Anzeigeeinheit, Eingabeeinheiten und eine Sende- und Empfangseinheit aufweist. Diese Steuereinheit ist über eine Übertragungsstrecke mit einer Überwachungskameraeinheit verbunden. Die Überwachungskameraeinheit weist eine Sende- und Empfangseinheit, eine Steuereinheit, eine Positioniereinheit und eine Kameraeinheit auf. Die Sende- und Empfangseinheit der Überwachungskameraeinheit überträgt das Videosignal der Kameraeinheit über die Übertragungsstrecke zur Sende- und Empfangseinheit der Steuereinheit. Die Rechnereinheit der Steuereinheit stellt das empfangene Videosignal auf der Anzeigeeinheit der Steuereinheit dar. Des Weiteren ermittelt die Steuereinheit anhand von Benutzereingaben den Abstand zwischen auf dem Anzeigebereich der Anzeigeeinheit vorgesehenen Markierungen in horizontaler und vertikaler Richtung, um relative Positionsdaten zu erhalten. Die Steuereinheit überträgt die relativen Positionsdaten an die Überwachungskameraeinheit. Die Steuereinheit der Überwachungskameraeinheit rechnet die relativen Positionsdaten anhand der aktuellen Einstellungen der Kameraeinheit in konkrete Einstelldaten als absolute Positionierdaten um und steuert die Positioniereinheit mit diesen absoluten Positionierdaten an. Die Positioniereinheit führt eine Neupositionierung der Kameraeinheit unter Verwendung der absoluten Positionierdaten durch.

Aus der DE 101 32 929 B4 sind ein Verfahren und eine Vorrichtung zur Steuerung von Schwenk-Neige-Bewegungen einer auf einer Positioniereinrichtung befestigten Kamera bekannt. Bei diesem bekannten Verfahren wird eine von einer Kamera aufgenommene Szene über eine Übertragungsstrecke übertragen und auf einem Bildschirm angezeigt. Des Weiteren wird auf dem Bildschirm eine Markierung dargestellt. Diese kann mittels einer Bedieneinrichtung über den Bildschirm verschoben und eingestellt werden. Der Ort der eingestellten Markierung wird als Antwort auf ein mit der Bedieneinrichtung auslösbares Signal als Zielpunkt ausgewählt. Die relativen Abstände des Zielpunktes zur Mitte des sichtbaren Bildes werden errechnet. Die Positioniereinrichtung führt anhand der übertragenen Daten und einer durchgeführten Geometriekorrektur eine Neupositionierung derart durch, dass der Zielpunkt in die Mitte des sichtbaren Bildes verschoben wird.

Aus der DE 102 61 146 A1 ist eine Steuerung eines Multikamera-Systems bekannt. Gemäß dem dort beanspruchten Verfahren erfolgt eine Erfassung eines Objekts in einer Szene mit mindestens einer ersten Kamera und mindestens einer zweiten orientierbaren Kamera. Im Kamerabild der ersten Kamera wird ein Bildpunkt und damit ein zugehöriger Weltpunkt in der durch die erste Kamera beobachteten Szene ausgewählt. Des Weiteren wird ein Sehstrahl durch den ausgewählten Bildpunkt bestimmt und die zweite Kamera auf den Weltpunkt ausgerichtet, indem eine Orientierung der zweiten Kamera am Sehstrahl erfolgt.

Im Unterschied zum vorstehend beschriebenen Stand der Technik erfolgt gemäß dem erfindungsgemäßen Verfahren eine genaue Steuerung einer PTZ-Kamera unter Verwendung eines Übersichtsbildes. Unter einem Übersichtsbild im Sinne der Erfindung wird ein Bild verstanden, das aus im Allgemeinen mehreren Teilbildern zusammengesetzt ist, wobei diese Teilbilder im Wesentlichen von einem Ort aus aufgenommen sind und entsprechend einer vorgegebenen mathematisch definierten Projektion in das Übersichtsbild umgerechnet werden. Für gebräuchliche Projektionen ergibt sich dabei im Übersichtsbild oftmals ein im Wesentlichen horizontales und vertikales Aneinanderreihen der Teilbilder. Das Übersichtsbild stellt damit eine nahtlose und artefaktfreie, jedoch im Allgemeinen verzerrt dargestellte Ansicht der Szene über einen im Allgemeinen beliebig großen Raumwinkelbereich dar.

Ein derartiges Übersichtsbild wird gemäß der vorliegenden Erfindung von der PTZ-Kamera selbst, welche zur Aufnahme der benötigten Teilbilder in der notwendigen Weise verschwenkt wird, oder von mindestens einer weiteren im Wesentlichem am selben Ort befindlichen Kamera erstellt und auf einem Display dargestellt. In das dargestellte Übersichtsbild wird eine Markierung eingeblendet, vorzugsweise ein Rahmen, um die momentane Blickrichtung und die momentane Zoomeinstellung der PTZ-Kamera anzuzeigen. Durch Verschieben und/oder Aufziehen des im dargestellten Übersichtsbild gezeigten Rahmens erfolgt eine Umpositionierung der PTZ-Kamera im Sinne einer Veränderung der Blickrichtung und der Zoomeinstellung der PTZ-Kamera.

Das Verschieben und/oder Aufziehen des Rahmens im dargestellten Übersichtsbild kann unter Verwendung einer Maus erfolgen. Alternativ dazu besteht die Möglichkeit, ein Verschieben des Rahmens in Abhängigkeit vom Ausgangssignal eines Bewegungsdetektors durchzuführen.

Wird das Übersichtsbild von der PTZ-Kamera selbst erstellt, dann bedarf es zur Realisierung des erfindungsgemäßen Verfahrens keiner weiteren Kamera.

Bei dem eingeblendeten Rahmen kann es sich um ein Viereck handeln, dessen Eckpunkte den vier Eckpunkten des momentanen Bildes von der PTZ-Kamera entsprechen. Alternativ dazu kann zum Zwecke einer erhöhten Genauigkeit auch ein Rahmen mit mehr Punkten dargestellt werden, wobei diese Punkte die echten Seitenlinien des PTZ-Bildes repräsentieren. Diese Seitenlinien können in Abhängigkeit von der jeweils verwendeten Projektion auch nicht geradlinig verlaufen.

In vorteilhafter Weise besteht die Möglichkeit, mittels der Eingabeeinheit im dargestellten Übersichtsbild einen Punkt zu markieren. Als Reaktion darauf wird die PTZ-Kamera bezüglich ihrer Blickrichtung und ihrer Zoomeinstellung derart gesteuert, dass der Mittelpunkt oder das Zoomzentrum der PTZ-Kamera auf den markierten Punkt verfahren wird. Dies ermöglicht es beispielsweise Sicherheitskräften in einem Fußballstadion, im Falle eines Abschießens von Feuerwerkskörpern an einer beliebigen Stelle des Fußballstadions durch eine schnelle Markierung eines Punktes im Übersichtsbild, der in der Nähe der Abschussstelle liegt, die PTZ-Kamera im Hinblick auf ihre Blickrichtung und ihre Zoomeinstellung schnell und automatisch an diesen Punkt zu verfahren, so dass der Übeltäter schnell identifiziert werden kann. Dies wird dadurch noch erleichtert, dass um den genannten Punkt herum ein Rahmen aufgezogen werden kann, so dass mit einem Bedienvorgang im Livebild der PTZ-Kamera auch die Umgebung der Abschussstelle automatisch in der gewünschten Größe (Zoomeinstellung) dargestellt wird.

Vorzugsweise erfolgt die Markierung eines Punktes im Übersichtsbild und ein Aufziehen eines Rahmens im Übersichtsbild in einfacher Weise unter Verwendung einer Maus, mittels welcher der Zielpunkt angeklickt, durch Verschieben der Maus bei gedrückter Maustaste der Rahmen aufgezogen und durch das Loslassen der Maustaste die Größe des Rahmens festgelegt wird. Es ist dabei vorteilhaft, wenn der aufgezogene Rahmen in seiner Form im Übersichtsbild automatisch so angepasst wird, dass er der Form eines Teilbildes an dieser Stelle entspricht. Diese Form wird durch die Projektion definiert und hängt von dieser sowie von der Stelle im Übersichtsbild ab.

Ein Verfahren der Blickrichtung hat im Allgemeinen eine veränderte Entfernung der Objekte an der neuen Position zur Folge. Um diese scharf zu sehen, ist daher eine veränderte Fokuseinstellung notwendig. Um die Einstellung der PTZ-Kamera an das veränderte Blickfeld automatisch anpassen zu können, wird in vorteilhafter Weise von Fokusdaten Gebrauch gemacht, die in einem Fokusdatenspeicher abgelegt sind. In diesem Fokusdatenspeicher ist für jeden Bildpunkt des Übersichtsbildes ein Fokuswert hinterlegt. Daraus resultiert der Vorteil, dass es im Falle einer Veränderung der Blickrichtung der PTZ-Kamera keiner manuellen Veränderung der Fokuseinstellung der PTZ-Kamera bedarf.

Vorzugsweise besteht des Weiteren die Möglichkeit, bezüglich des Übersichtsbildes Bildbereiche vorzugeben, die bei der Darstellung eines aktuellen Bildes der PTZ-Kamera nicht oder nur eingeschränkt einsehbar sind. Dies kann durch eine geschwärzte Darstellung oder eine unscharfe Darstellung der vorgegebenen Bildbereiche realisiert werden. Dadurch können beispielsweise im Falle einer Überwachung eines Firmengeländes Privatbereiche ausgeschlossen werden.

Eine weitere vorteilhafte Ausgestaltung der Erfindung besteht darin, das Verschieben des Blickfeldes der PTZ-Kamera in Abhängigkeit vom Ausgangssignal eines Bewegungsdetektörs vorzunehmen, welcher das Livebild der PTZ-Kamera auswertet. Wird eine Bewegung detektiert, dann wird die PTZ-Kamera schnell und automatisch bezüglich ihrer Blickrichtung und Zoomeinstellung derart verfahren, dass die Stelle, an welcher Bewegung aufgetreten ist, in der Bildmitte des von der PTZ-Kamera gelieferten Livebildes erscheint.

Weitere vorteilhafte Eigenschaften der Erfindung ergeben sich aus deren nachfolgender Erläuterung anhand der Figuren. Es zeigt
- Figur 1: eine Blockdarstellung zur Erläuterung eines ersten Ausführungsbeispiels für die Erfindung,
- Figur 2: eine Blockdarstellung zur Erläuterung eines zweiten Ausführungsbeispiels für die Erfindung.
- Figur 3: eine Skizze zur Veranschaulichung eines in ein Übersichtsbild eingeblendeten Rahmens,
- Figur 4: eine Skizze zur Veranschaulichung eines privaten Bereiches in einem Übersichtsbild.

Die vorliegende Erfindung betrifft die Steuerung einer PTZ-Kamera. Unter einer PTZ-Kamera wird dabei eine Kamera verstanden, die um eine vertikal verlaufende Achse, die sogenannte Pan-Achse, und um eine horizontal verlaufende Achse, die sogenannte Tilt-Achse, verschwenkbar ist und bei welcher die Zoomeinstellung der Kamera verändert werden kann. Gemäß der vorliegenden Erfindung wird zur Steuerung dieser PTZ-Kamera ein auf einem Display dargestelltes Übersichtsbild verwendet, in welchem eine gewünschte Stelle markiert wird. Als Reaktion auf diese Markierung wird die Blickrichtung und die Zoomeinstellung der PTZ-Kamera automatisch in dem Sinne verändert, dass die PTZ-Kamera auf die gewünschte Stelle gerichtet ist, so dass ein aktuelles Bild von der gewünschten Stelle auf einem Display betrachtet werden kann.

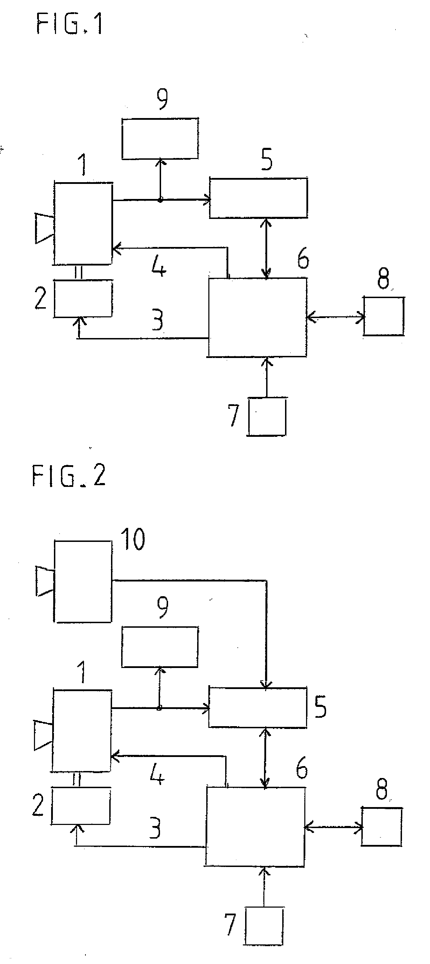

Die Figur 1 zeigt eine Blockdarstellung zur Erläuterung eines ersten Ausführungsbeispiels für die Erfindung. Diese Blockdarstellung offenbart eine Vorrichtung zur Steuerung einer PTZ-Kamera. Die PTZ-Kamera 1 ist auf einer Positioniereinrichtung 2 befestigt. Die Ausgangssignale der PTZ-Kamera 1 werden einer Displayeinheit 5 zugeführt. Die Displayeinheit 5 wird von einer Steuereinheit 6 angesteuert. Die Steuereinheit 6 liefert über eine Steuersignalverbindung 3 Steuersignale an die Positioniereinrichtung 2, um bei Bedarf eine horizontale und vertikale Verschwenkung der PTZ-Kamera 1 durchzuführen. Weiterhin liefert die Steuereinheit 6 über eine Steuersignalverbindung 4 Steuersignale an die PTZ-Kamera selbst, um deren Zoomeinstellung zu verändern. Ferner steht die Steuereinheit 6 mit einer Eingabeeinheit 7 und einem Fokusdatenspeicher 8 in Verbindung.

Mittels der PTZ-Kamera 1 wird zunächst ein Übersichtsbild erstellt. Zu diesem Zweck wird mittels der PTZ-Kamera 1 zeitlich nacheinander und nach einer entsprechenden Umpositionierung der Kamera eine Vielzahl von Teilbildern aufgenommen und der Displayeinheit 5 zugeführt. Dort werden die Teilbilder in der oben näher beschriebenen Weise in horizontaler und vertikaler Richtung zusammengesetzt. Das dadurch entstehende Übersichtsbild wird auf dem Display der Displayeinheit 5 angezeigt. Dieses Übersichtsbild kann für einen längeren Zeitraum unverändert bleiben, es kann jedoch auch in vorgegebenen Zeitabständen, die beispielsweise in der Größenordnung einer Minute liegen, aktualisiert werden.

Ein aktuelles Livebild der PTZ-Kamera wird auf einem weiteren Display 9 dargestellt, welches in der Nähe der Displayeinheit 5 positioniert ist.

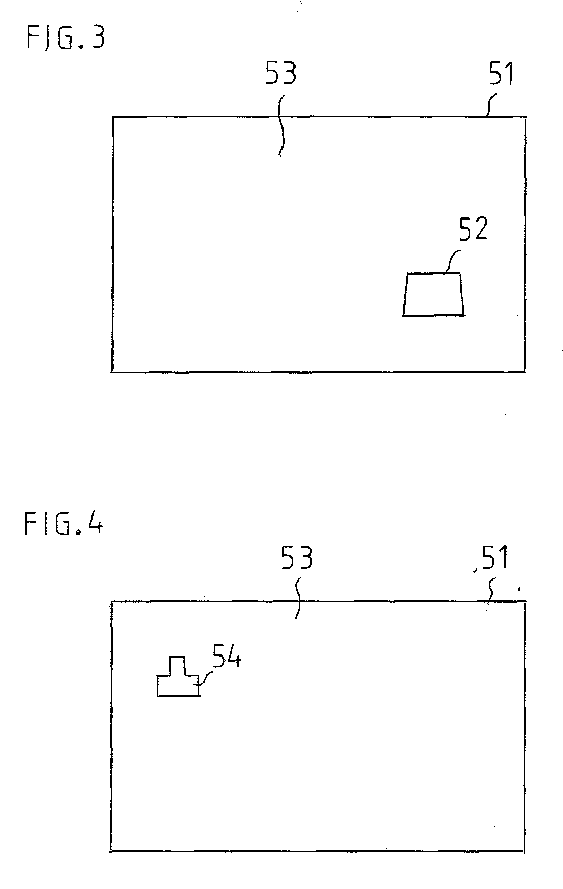

Zu einer Steuerung der PTZ-Kamera wird zunächst eine Markierung in das dargestellte Übersichtsbild eingeblendet, um die momentane Blickrichtung und die momentane Zoomeinstellung der PTZ-Kamera anzuzeigen. Dies ist in der Figur 3 veranschaulicht. Dort ist das Display 51 der Displayeinheit 5 gezeigt. Auf diesem Display 51 ist das Übersichtsbild 53 dargestellt, in welches ein Rahmen 52 eingeblendet ist, der die momentane Blickrichtung und die momentane Zoomeinstellung der PTZ-Kamera anzeigt. Der Rahmen zeit damit das von der Kamera momentan erfasste Blickfeld an. Die Einblendung der Markierung in das Übersichtsbild kann mittels der Eingabeeinheit 7 ausgelöst werden, welche über die Steuereinheit 6 mit der Displayeinheit 5 verbunden ist.

Soll nun das Blickfeld der PTZ-Kamera 1 auf eine bestimmte andere Stelle gerichtet werden, dann geschieht dies durch eine Veränderung der Markierung im dargestellten Übersichtsbild.

Dies kann gemäß einer ersten Ausführungsform dadurch erfolgen, dass mittels der Bedieneinheit 7, bei der es sich um eine Maus handelt, der in das Übersichtsbild eingeblendete Rahmen an die jeweils gewünschte andere Stelle des Übersichtsbildes gezogen wird.

Gemäß einer zweiten Ausführungsform kann dies dadurch erfolgen, dass mittels der Bedieneinheit 7 die gewünschte andere Stelle im Übersichtsbild markiert wird und dann an dieser Stelle ein neuer Rahmen gewünschter Größe aufgezogen wird. Dies kann ebenfalls mittels einer Maus erfolgen, indem durch einen ersten Mausklick die gewünschte andere Stelle im Übersichtsbild markiert wird, dann bei gedrückter Maustaste um diese Stelle ein Rahmen gewünschter Größe aufgezogen und durch ein Loslassen der Maustaste festgelegt wird.

Diese Betätigungen der Bedieneinheit 7 werden von der Steuereinheit 6 detektiert und in Steuerbefehle umgesetzt, die der Positioniereinrichtung 2 über die Steuersignalverbindung 3 und der PTZ-Kamera 1 über die Steuersignalverbindung 4 zugeführt werden. Mittels dieser Steuersignale erfolgt eine Veränderung der Blickrichtung und der Zoomeinstellung der PTZ-Kamera.

Die technische Grundlage für eine derartige genaue Steuerung der PTZ-Kamera unter Verwendung eines Übersichtsbildes ist die Kenntnis des geometrischen Bezuges zwischen den möglichen Positionen im Übersichtsbild und der Pan-, Tilt- und Zoomeinstellung der PTZ-Kamera und den Positionen in deren eigenem Bild bei der jeweils vorliegenden Pan-, Tilt und Zoomeinstellung der PTZ-Kamera.

Um diesen Bezug herzustellen wird eine Modellierung und Kalibrierung der mechanischen (Pan-, Tilt-Mechanik) und optischen (Öffnungswinkel, Radialverzerrungen) Kameraeigenschaften sowie eine Modellierung der für das Übersichtsbild verwendeten Projektion durchgeführt.

Dabei werden für die Abbildung eines Bildpunktes in einer beliebigen Pan-, Tilt-Stellung in das Übersichtsbild und umgekehrt folgende Schritte durchgeführt:

Zunächst wird ein beliebiger Bildpunkt im Bild der PTZ-Kamera in einer beliebigen Pan-, Tilt-Position auf eine absolute Raumrichtung, d. h. in Weltkoordinaten, umgerechnet. Das Weltkoordinatensystem ist beliebig. Zweckmäßigerweise wird dafür das Kamerasystem für Pan = 0 und Tilt = 0 gewählt. Weiterhin wird ohne Einschränkung angenommen, dass ein System mit ortsfester Pan-Achse vorliegt.

Danach werden folgende Schritte durchgeführt (erste Anweisungen):
- eine Radialentzerrung, bei welcher die Kamerabilder in entzerrte virtuelle Kamerabilder umgerechnet werden. Dabei werden Geraden exakt auf Geraden abgebildet. Die virtuelle Kamera verhält sich dann wie eine mathematisch ideale projektive Abbildung;
- optional kann ein Kameraroll korrigiert werden. Dies entspricht einer Drehung um die Längsachse. Roll kommt vor, wenn bei horizontaler Tiltstellung die vertikale Achse des Kamerachips nicht parallel zur Pan-Achse verläuft;
- Transformieren eines beliebigen Bildpunktes auf die Bildmitte. Dies kann beispielsweise unter Verwendung der in der DE 101 32 929 B4 offenbarten Technik erfolgen;
- Drehung der Bildmitte auf die z-Achse des Weltkoordinatensystems unter Verwendung der dem Pan und Tilt entsprechenden Drehmatrizen bei willkürlich festgelegter Nullrichtung.

Nach Durchführung dieser Schritte ist für einen gegebenen Bildpunkt im Bild der PTZ-Kamera die absolute Raumrichtung gegeben und umgekehrt.

Des Weiteren wir die Umrechung von Raumrichtungen in ein Übersichtsbild modelliert. Raumrichtungen entsprechen Punkten auf einer Kugel. Folglich entspricht dieses Problem dem sogenannten Atlantenproblem, d. h. einer Abbildung der Weltkugel auf ebene Karten, wobei im vorliegenden Fall eine Abbildung auf ein ebenes Display durchzuführen ist.

Dazu werden folgende Schritte (zweite Anweisungen) durchgeführt, wobei sich je nach Projektionsart auch Abweichungen ergeben können:
- Festlegen einer Projektionsfläche (Zylinder, Kegel, etc.), die den Ursprung des Weltkoordinatensystems teilweise oder vollständig umgibt;
- Schneiden der berechneten Raumrichtung mit dieser Projektionsfläche;
- Abbilden der Projektionsfläche in die Ebene, beispielsweise durch ein Durchschneiden und Aufrollen des Zylinders oder Kegels;
- linear oder auch nichtlineare Skalierungen in Höhe und Breite, um den Maßstab bzw. die Pixelanzahl festzulegen. Bei Bedarf können beliebige geometrische Bildtransformationen implementiert werden, beispielsweise eine Darstellung eines Ausschnitts des Übersichtsbildes mit besonderer Genauigkeit. Dies entspricht einem elektronischen Warpen von Bildern beispielsweise für Karikaturen.

Mittels dieser Umrechnungen kann das Verfahren gemäß der Erfindung ausgeführt werden. Für die Schritte, die die Anzeige der momentanen Kamerapositionen betreffen, werden entsprechend den oben gegebenen ersten Anweisungen die entsprechenden Bildpunkte (Randpunkte, Eckpunkte, Bildmitte und/oder Zoomzentrum) erst auf absolute Raumrichtungen umgerechnet und dann mit den oben gegebenen zweiten Anweisungen in das Übersichtsbild projiziert.

Für die Schritte, die die Steuerung der Kamera betreffen, wird umgekehrt eine gegebene Position im Übersichtsbild erst mittels der zweiten Anweisungen in eine absolute Raumrichtung umgerechnet. Unter Umkehrung des letzten Schrittes der ersten Anweisungen können dann die Pan- und Tilt-Werte ermittelt werden, die diesen Punkt zum neuen Bildmittelpunkt machen. Für diesen neuen Mittelpunkt und die momentane Zoomeinstellung kann wie im vorhergehenden Abschnitt der Rahmen des momentanen Blickfeldes berechnet und angezeigt werden. Soll auch die Zoomeinstellung, etwa durch ein Ziehen der Maus, angepasst werden, so kann durch das Ziehen der Maus die Zoomeinstellung virtuell verändert und der dazugehörige Rahmen eingeblendet werden. Erscheint der durch den Rahmen angezeigte Ausschnitt geeignet, Wird beispielsweise durch ein Loslassen der Maustaste die Kamera tatsächlich auf diese Einstellung verfahren. Die Veränderung des virtuellen Zooms kann dabei derart erfolgen, dass der neue Öffnungswinkel dem Winkel zwischen den absoluten Raumrichtungen des neuen Mittelpunkts und der aktuellen Mausposition während des Ziehens entspricht. Der angezeigte Rahmen hat dann zum einen die korrekte geometrische Form eines Teilbildes und geht zum anderen in etwa durch die aktuelle Mausposition.

Die Figur 2 zeigt eine Blockdarstellung zur Erläuterung eines zweiten Ausführungsbeispiels für die Erfindung. Dieses zweite Ausführungsbeispiel unterscheidet sich von dem in der Figur 1 dargestellten Ausführungsbeispiel dadurch, dass die einzelnen Teilbilder, aus denen das Übersichtsbild zusammengesetzt wird, nicht von der PTZ-Kamera 1, sondern von einer weiteren Kamera 10 erstellt werden. Alternativ dazu können zur Erstellung der Teilbilder, aus denen das Übersichtsbild zusammengesetzt ist, auch mehrere weitere Kameras verwendet werden.

Die weiteren Kameras befinden sich daher relativ zu den Entfernungen der Objekte in der Szene im Wesentlichen am selben Ort. Auf diese Weise können die genauen Objektentfernungen beim Erstellen des Übersichtsbildes unberücksichtigt und unbekannt bleiben.

In vorteilhafter Weise ist bei beiden vorgenannten Ausführungsbeispielen im Fokusdatenspeicher 8 für jeden Bildpunkt des Übersichtsbildes ein Fokuswert hinterlegt. Dieser Fokuswert wird beim Anfahren einer zugehörigen Position der PTZ-Kamera von der Steuereinheit 6 aus dem Fokusdatenspeicher 8 abgerufen und bei der Ermittlung der Steuersignale für die PTZ-Kamera berücksichtigt. Der Fokuswert entspricht dabei der zuvor ermittelten Objektentfernung an dieser Position.

Eine vorteilhafte Weiterbildung der Erfindung besteht darin, im Übersichtsbild private Bereich anzugeben, so dass der aktuelle Bildinhalt dieser Bereiche im Livebild der PTZ-Kamera nicht oder nur eingeschränkt einsehbar ist. Beispielsweise können diese privaten Bereiche im Livebild der PTZ-Kamera geschwärzt oder unscharf dargestellt werden.

Ein Beispiel für einen derartigen privaten Bereich ist in der Figur 4 veranschaulicht. Dort wird auf dem Display 51 das Übersichtsbild 53 angezeigt. Mit der Bezugszahl 54 ist ein privater Bereich bezeichnet, der vom Bediener mittels der Bedieneinheit 7 vorgegeben wurde.

Durch die oben beschriebene geometrische Kopplung kann von der Steuereinheit 6 selbst bei einer großen Anzahl von privaten Bereichen in einfacher Weise festgestellt werden, ob und wo das momentane Blickfeld der PTZ-Kamera mit einem dieser privaten Bereiche überlappt. Im Falle einer derartigen Überlappung können - wie bereits oben angegeben - alternativ nur die überlappenden Bereiche oder das ganze Bild geschwärzt oder unscharf dargestellt werden. Alternativ dazu kann auch bezüglich dieser Bereiche eine Einstellung großer Zoomwerte verweigert werden, d. h. die Kamera lässt sich nicht in diese Bereich hineinzoomen.

Eine andere vorteilhafte Weiterbildung besteht darin, das Verschieben und/oder Aufziehen eines Rahmens im dargestellten Übersichtsbild in Abhängigkeit von den Ausgangssignalen eines Bewegungsdetektors durchzuführen. Bewegungsdetektoren haben Einstellungen, welche Überwachungsbereiche, zulässige und unzulässige Bewegungsrichtungen und Bildperspektiven (Größe von Personen vorne und hinten im Bild) festlegen. Ein Problem bei der Anwendung von Bewegungsdetektoren im Zusammenhang mit bekannten PTZ-Kameras besteht darin, dass die genannten Einstellungen sich nur auf eine bestimmte Position der PTZ-Kamera beziehen. Folglich benötigen verschiedene Positionen der PTZ-Kamera auch verschiedene Einstellungen. Dies ist mit hohem Zeitaufwand verbunden. Für nicht eingestellte Positionen der PTZ-Kamera ist keine Bewegungsdetektion möglich. Die erfindungsgemäße Steuerung ermöglicht es nunmehr, die Überwachungsbereiche und Richtungen, etc., im Übersichtsbild anzugeben. Daten bezüglich der Perspektive können dem oben genannten Fokusdatenspeicher 8 entnommen werden, in welchem eine Art Fokuskarte abgespeichert ist. Damit kann in jeder Stellung von Pan, Tilt und Zoom der PTZ-Kamera eine Bewegungsdetektion durchgeführt werden, da die Steuereinheit für die jeweilige Stellung die Größen vom Übersichtsbild in das momentane Bild der PTZ-Kamera umrechnen kann.

Eine weitere Ausführungsvariante besteht darin, das momentane Livebild der PTZ-Kamera als ein Übersichtsbild zu betrachten. Wird in dieses Bild mittels der Maus hineingeklickt und ein Rahmen gewünschter Größe aufgezogen, dann werden Pan, Tilt und Zoom der PTZ-Kamera von der Steuereinheit 6 so eingestellt, dass der durch Rahmen definierte Bildausschnitt als komplettes Bild dargestellt wird. Dies entspricht einem Maus-Zoom-Tracking.

## Patentansprüche

1. Verfahren zur Steuerung einer PTZ-Kamera mit folgenden Schritten:
- Erstellung eines Übersichtsbildes,
- Darstellung des Übersichtsbildes auf einem Display,
- Einblendung einer Markierung in das dargestellte Übersichtsbild zur Anzeige der momentanen Blickrichtung und/oder der momentanen Zoomeinstellung der PTZ-Kamera,
- Veränderung der Markierung im dargestellten Übersichtsbild und
- Veränderung der Blickrichtung und/oder der Zoomeinstellung der PTZ-Kamera als Reaktion auf die Veränderung der Markierung.

2. Verfahren nach Anspruch 1, **dadurch gekennzeichnet, dass** die Markierung ein Rahmen ist und dass der Rahmen zur Veränderung der Blickrichtung und der Zoomeinstellung verschoben und/oder aufgezogen wird.

3. Verfahren nach Anspruch 2, **dadurch gekennzeichnet, dass** das Verschieben und/oder Aufziehen des Rahmens im dargestellten Übersichtsbild mittels einer Eingabeeinheit erfolgt und die Eingabeeinheit eine Maus ist.

4. Verfahren nach einem der Ansprüche 1 bis 3, **dadurch gekennzeichnet, dass** das Übersichtsbild eine Vielzahl von horizontal und vertikal zusammengesetzten und entsprechend einer gegebenen Projektion umgerechneten Teilbildern aufweist und diese Teilbilder von der PTZ-Kamera erstellt werden.

5. Verfahren nach einem der Ansprüche 1 bis 3, **dadurch gekennzeichnet, dass** das Übersichtsbild eine Vielzahl von horizontal und vertikal zusammengesetzten und entsprechend einer gegebenen Projektion umgerechneten Teilbildern aufweist und diese Teilbilder von einer oder mehreren weiteren Kameras erstellt werden.

6. Verfahren nach einem der vorhergehenden Ansprüche 2 - 5, **dadurch gekennzeichnet, dass** ein viereckiger Rahmen in das dargestellte Übersichtsbild eingeblendet wird, wobei die Eckpunkte des Rahmens den Eckpunkten des momentanen Blickfeldes der PTZ-Kamera entsprechen.

7. Verfahren nach einem der Ansprüche 2 - 5, **dadurch gekennzeichnet, dass** ein die echten Seitenlinien des momentanen Blickfeldes der PTZ-Kamera repräsentierender Rahmen eingeblendet wird.

8. Verfahren nach einem der vorhergehenden Ansprüche, **dadurch gekennzeichnet, dass** der Mittelpunkt oder das Zoomzentrum des momentanen Bildes der PTZ-Kamera im Übersichtsbild angezeigt wird.

9. Verfahren nach einem der vorhergehenden Ansprüche, **dadurch gekennzeichnet, dass** ein von der PTZ-Kamera abgeleitetes Livebild in das Übersichtsbild eingeblendet wird.

10. Verfahren nach einem der vorhergehenden Ansprüche, **dadurch gekennzeichnet, dass** mittels der Eingabeeinheit im dargestellten Übersichtsbild ein Punkt markiert und die PTZ-Kamera als Folge dieser Markierung bezüglich ihrer Blickrichtung und ihrer Zoomeinstellung derart gesteuert wird, dass der Mittelpunkt oder das Zoomzentrum auf den markierten Punkt verfahren wird.

11. Verfahren nach einem der vorhergehenden Ansprüche, **dadurch gekennzeichnet, dass** im dargestellten Übersichtsbild ein Rahmen aufgezogen wird, indem mittels eines ersten Betätigungsvorgangs der Eingabeeinheit der Mittelpunkt oder ein Eckpunkt des Rahmens festgelegt wird und mittels eines zweiten Betätigungsvorgangs der Eingabeeinheit die Größe des Rahmens festgelegt wird, wobei die Form des Rahmens automatisch der tatsächlichen Form eines in das Übersichtsbild projizierten Teilbildes entspricht.

12. Verfahren nach Anspruch 11, **dadurch gekennzeichnet, dass** der erste Betätigungsvorgang ein Mausklick und der zweite Betätigungsvorgang ein Ziehen und Loslassen der Maustaste ist.

13. Verfahren nach einem der vorhergehenden Ansprüche, **dadurch gekennzeichnet, dass** beim Verfahren der PTZ-Kamera auf ein neues Blickfeld die Kamera auf in einem Fokusdatenspeicher abgespeicherte Fokusdaten eingestellt wird, wobei im Fokusdatenspeicher für jeden Bildpunkt des Übersichtsbildes ein Fokuswert hinterlegt ist.

14. Verfahren nach einem der vorhergehenden Ansprüche, **dadurch gekennzeichnet, dass** bezüglich des Übersichtsbildes Bildbereiche vorgegeben werden, die bei der Darstellung eines aktuellen Bildes der PTZ-Kamera auf dem Display nicht oder nur eingeschränkt einsehbar sind.

15. Verfahren nach Anspruch 14, **dadurch gekennzeichnet, dass** die vorgegebenen Bildbereiche geschwärzt dargestellt werden.

16. Verfahren nach Anspruch 14, **dadurch gekennzeichnet, dass** die vorgegebenen Bildbereiche unscharf dargestellt werden.

17. Verfahren nach Anspruch 2, **dadurch** gekenn- zeichnet, dass das Verschieben des Rahmens im dargestellten Übersichtsbild in Abhängigkeit von den Ausgangssignalen eines Bewegungsdetektors vorgenommen wird, welcher das Livebild der PTZ-Kamera auswertet.

18. Verfahren nach einem der vorhergehenden Ansprüche, **dadurch gekennzeichnet, dass** das Übersichtsbild aus nur einem Teilbild der PTZ-Kamera besteht und es sich bei diesem Teilbild um das aktuelle Livebild der PTZ-Kamera handelt.

19. Vorrichtung zur Steuerung einer PTZ-Kamera, mit
- einer PTZ-Kamera (1),
- einem Display (51), auf welchem ein Übersichtsbild darstellbar ist,
- einer Steuereinheit (6) zur Steuerung der Einblendung einer Markierung in das dargestellte Übersichtsbild,
- Mitteln (7) zum Verändern der Markierung im dargestellten Übersichtsbild und
- Mitteln (6) zum Verändern der Blickrichtung und/oder der Zoomeinstellung der PTZ-Kamera als Reaktion auf eine Veränderung der Markierung.

20. Vorrichtung nach Anspruch 19, **dadurch gekennzeichnet, dass** die Steuereinheit (6) zur Steuerung der Einblendung eines Rahmens (52) in das dargestellte Übersichtsbild (53) vorgesehen ist und dass Mittel zum Verschieben und/oder Aufziehen des Rahmens vorgesehen sind.

21. Vorrichtung nach Anspruch 20, **dadurch gekennzeichnet, dass** die Mittel zum Verschieben und/oder Aufziehen eines Rahmens im dargestellten Übersichtsbild eine Eingabeeinheit (7) sind.

22. Vorrichtung nach Anspruch 21, **dadurch** gekenn- zeichnet, dass die Mittel zum Verschieben und/oder Aufziehen des Rahmens im dargestellten Übersichtsbild eine Maus sind.

23. Vorrichtung nach Anspruch 20, **dadurch** gekenn- zeichnet, dass die Mittel zum Verschieben und/oder Aufziehen eines Rahmens im dargestellten Übersichtsbild einen Bewegungsdetektor umfassen.

24. Vorrichtung nach einem der Ansprüche 20 - 23, **dadurch gekennzeichnet, dass** die PTZ-Kamera die zur Zusammensetzung des Übersichtsbildes verwendeten Teilbilder erstellt.

25. Vorrichtung nach einem der Ansprüche 20 - 23, **dadurch gekennzeichnet, dass** sie mindestens eine weitere Kamera (10) aufweist, die die zur Zusammensetzung des Übersichtsbildes verwendeten Teilbilder erstellt.

26. Vorrichtung nach einem der Ansprüche 20 - 25, **dadurch gekennzeichnet, dass** sie einen Fokusdatenspeicher (8) aufweist, in welchem für jeden Bildpunkt des Übersichtsbildes Fokusdaten abgespeichert sind.

27. Vorrichtung nach Anspruch 26, **dadurch gekennzeichnet, dass** die Steuereinheit (6) dazu vorgesehen ist, bei einem Verfahren der PTZ-Kamera auf ein neues Blickfeld dem neuen Blickfeld zugehörige Fokusdaten aus dem Fokusdatenspeicher auszulesen und der PTZ-Kamera zu deren Fokuseinstellung zuzuführen.

28. Vorrichtung nach einem der Ansprüche 20 - 27, **dadurch gekennzeichnet, dass** mittels der Eingabeeinheit Bildbereiche (54) des Übersichtsbildes (53) vorgebbar sind, die bei der Darstellung eines Livebildes der PTZ-Kamera nicht oder nur eingeschränkt einsehbar sind.
